(19) **Europäisches Patentamt / European Patent Office / Office européen des brevets**

(11) **EP 4 518 500 A1**

(12) **EUROPEAN PATENT APPLICATION**
published in accordance with Art. 153(4) EPC

(43) Date of publication:
**05.03.2025 Bulletin 2025/10**

(21) Application number: **23796878.9**

(22) Date of filing: **28.04.2023**

(51) International Patent Classification (IPC):
**H04W 72/0457** (2023.01)   **H04W 72/231** (2023.01)
**H04W 72/232** (2023.01)   **H04W 72/542** (2023.01)
**H04W 74/08** (2024.01)

(52) Cooperative Patent Classification (CPC):
**H04W 72/0457; H04W 72/231; H04W 72/232;
H04W 72/542; H04W 74/08**

(86) International application number:
**PCT/KR2023/005856**

(87) International publication number:
**WO 2023/211239 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022   US 202263336292 P
28.04.2022   US 202263336295 P**

(71) Applicant: **LG Electronics Inc.
Yeongdeungpo-gu
Seoul 07336 (KR)**

(72) Inventors:
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **AHN, Seungjin**
  **Seoul 06772 (KR)**

(74) Representative: **Plasseraud IP
104 Rue de Richelieu
CS92104
75080 Paris Cedex 02 (FR)**

(54) **METHOD AND DEVICE FOR PERFORMING UPLINK OR DOWNLINK TRANSMISSION AND RECEPTION IN WIRELESS COMMUNICATION SYSTEM**

(57)   A method and a device for performing uplink or downlink transmission and reception in a wireless communication system are disclosed. A method performed by a terminal in a wireless communication system according to an embodiment of the present disclosure may comprise the steps of: receiving information on multiple sub-bandwidth parts (sub-BWPs) configured in a particular uplink BWP; transmitting a preamble related to a random access procedure; receiving a response message for the preamble; and performing subsequent uplink transmission in a particular sub-BWP among the multiple sub-BWPs according to the response message, wherein the particular sub-BWP is indicated on the basis of the response message.

FIG.12

START

Receive information on a plurality of
sub-BWPs configured in a specific UL BWP — S1210

Transmit a preamble related to RA procedure — S1220

Receive a response message for the preamble — S1230

Perform a subsequent UL transmission
according to the response message
in the specific sub-BWP among the plurality
of sub-BWPs — S1240

END

**Description**

[TECHNICAL FIELD]

The present disclosure relates to a wireless communication system, and more particularly, to a method and device for a user equipment (UE) having reduced capability in a wireless communication system to perform uplink or downlink transmission and reception based on a sub-bandwidth part (BWP).

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and device for performing uplink or downlink transmission and reception based on a bandwidth part (BWP) and a sub-BWP in a wireless communication system.

A technical object of the present disclosure is to provide a sub-BWP operation method and device that considers a UE with reduced capability in a wireless communication system.

A technical object of the present disclosure is to provide a method and device for transmitting and receiving system information considering a UE with reduced capability in a wireless communication system.

The technical objects to be achieved by the present disclosure are not limited to the above-described technical objects, and other technical problems which are not described herein will be clearly understood by those skilled in the pertinent art from the following description.

[Technical Solution]

A method performed by a user equipment (UE) in a wireless communication system according to an aspect of the present disclosure may comprise: receiving information on a plurality of sub-BWPs configured in a specific uplink bandwidth part (BWP); transmitting a preamble related to a random access procedure; receiving a response message for the preamble; and performing a subsequent uplink transmission according to the response message in a specific sub-BWP among the plurality of sub-BWPs. Herein, the specific sub-BWP may be indicated based on the response message.

A method performed by a base station in a wireless communication system according to an additional aspect of the present disclosure may comprise: transmitting information on a plurality of sub-BWPs configured in a specific uplink bandwidth part (BWP); receiving a preamble related to a random access procedure; transmitting a response message to the preamble; and performing a subsequent uplink reception according to the response message in a specific sub-BWP among the plurality of sub-BWPs. Herein, the specific sub-BWP may be indicated based on the response message.

[Technical Effects]

According to an embodiment of the present disclosure, a method and device for performing uplink or downlink transmission and reception based on a bandwidth part (BWP) and a sub-BWP in a wireless communication system may be provided.

According to an embodiment of the present disclosure, a sub-BWP operation method and device considering a UE with reduced capability in a wireless communication system may be provided.

According to an embodiment of the present disclosure, a method and device for transmitting and receiving system information considering a UE with reduced capability in a wireless communication system may be provided.

Effects achievable by the present disclosure are not limited to the above-described effects, and other effects which are not described herein may be clearly understood by those skilled in the pertinent art from the following description.

[BRIEF DESCRIPTION OF THE DRAWINGS]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a 4-step random access procedure in a wireless communication system to which the present disclosure may be applied.

FIG. 8 illustrates a 2-step random access procedure in a wireless communication system to which the present disclosure may be applied.

FIG. 9 illustrates an operation flowchart for configuring a sub-BWP in a wireless communication system according to an embodiment of the present disclosure.

FIG. 10 illustrates a method for configuring a sub-BWP in a wireless communication system according to an embodiment of the present disclosure.

FIG. 11 illustrates another method for configuring a sub-BWP in a wireless communication system according to an embodiment of the present disclosure.

FIG. 12 is a diagram illustrating the operation of a UE for a method for performing a sub-BWP based RA procedure according to one embodiment of the present disclosure.

FIG. 13 is a diagram illustrating the operation of a base station for a method for performing a sub-BWP based RA procedure according to one embodiment of the present disclosure.

FIG. 14 illustrates a block diagram of a wireless communication device according to one embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform

- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

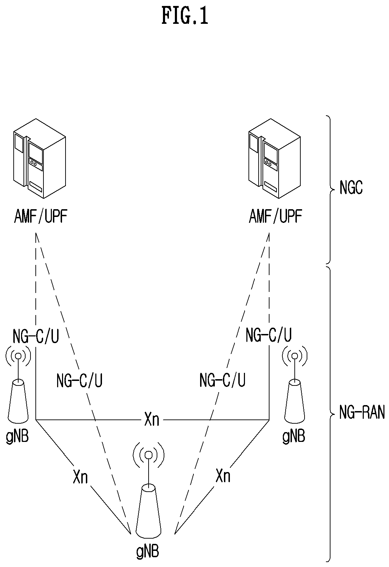

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

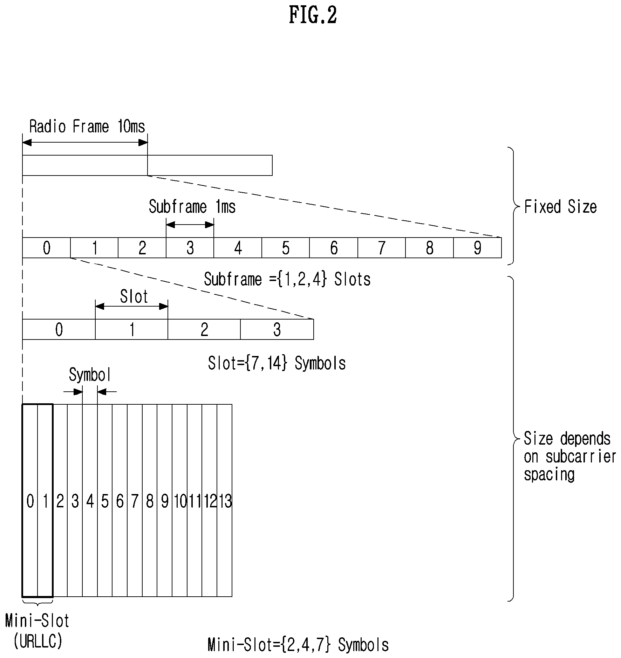

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration μ, slots are numbered in an increasing order of $n_s^{\mu} \in \{0, ..., N_{slot}^{subframe,\mu} - 1\}$ in a subframe and are numbered in an increasing order of $n_{s,f}^{\mu} \in \{0, ..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,μ}$ | $N_{slot}^{subframe,μ}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

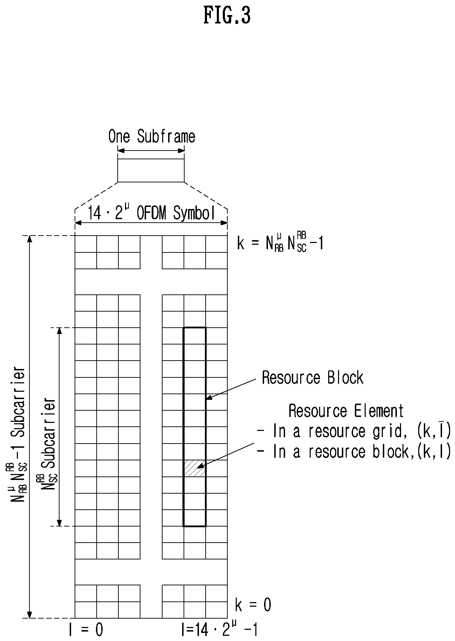

FIG. 3 illustrates a resource grid in a wireless communication system to which the present disclosure may be applied.

In reference to FIG. 3, it is illustratively described that a resource grid is configured with $N_{RB}^{μ}N_{sc}^{RB}$ subcarriers in a frequency domain and one subframe is configured with $14·2^{μ}$ OFDM symbols, but it is not limited thereto. In an NR system, a transmitted signal is described by OFDM symbols of $2^{μ}N_{symb}^{(μ)}$ and one or more resource grids configured with $N_{RB}^{μ}N_{sc}^{RB}$ subcarriers. Here, $N_{RB}^{μ}≤N_{RB}^{max,μ}$. The $N_{RB}^{max,μ}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{μ}N_{sc}^{RB}-1$ is an index in a frequency domain and $l'=0,...,2^{μ}N_{symb}^{(μ)}-1$ refers to a position of a symbol in a subframe. When referring to a resource element in a slot, an index pair (k,l) is used. Here, $l=0,...,N_{symb}^{μ}-1$. A resource element (k,l') for μ and an antenna port p corresponds to a complex value, $a_{k,l'}^{(p,μ)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{μ}$ and a resource element (k,l) for a subcarrier spacing configuration μ in a frequency domain is given as in the following Equation 1.

【Equation 1】

$$n_{CRB}^{μ} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,μ}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

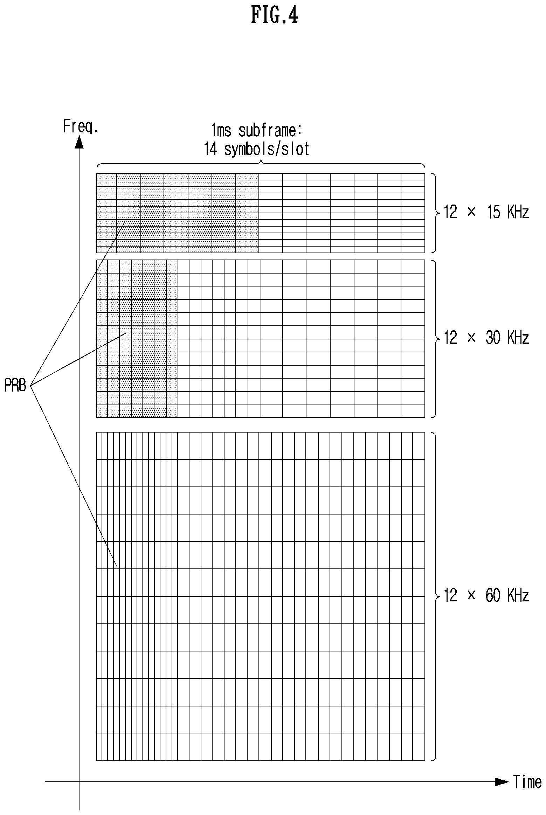

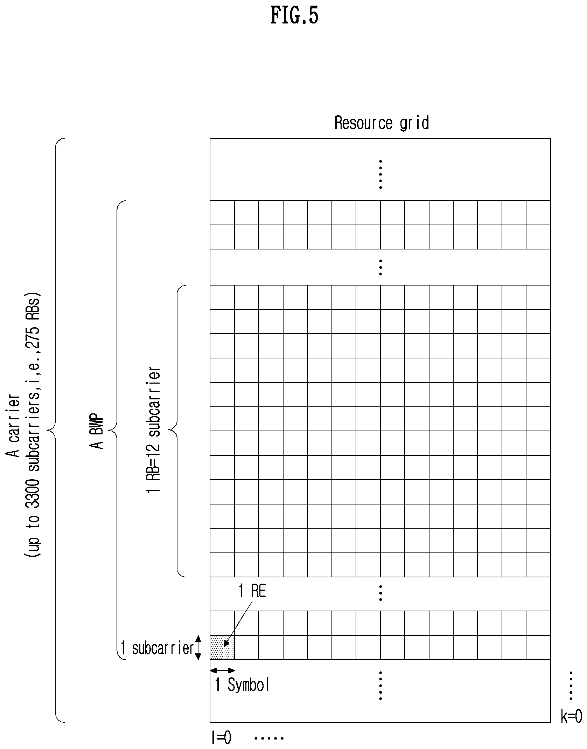

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

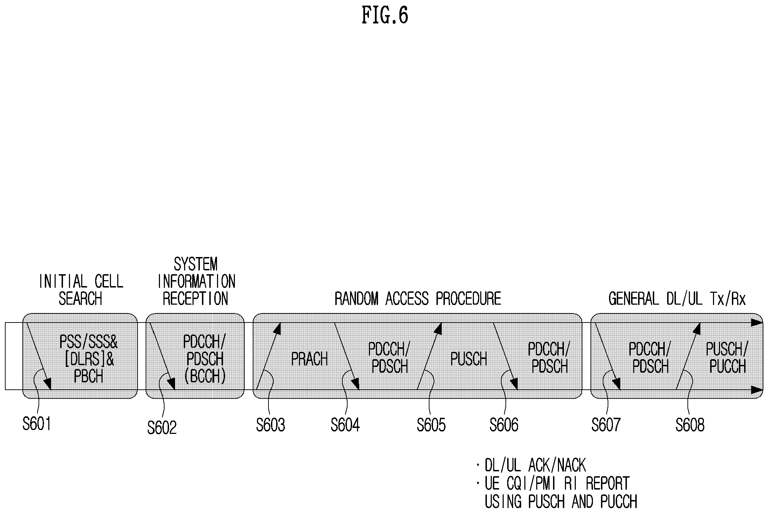

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table **5**]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Random access procedure

In a wireless communication system, the random access procedure may be used for various purposes. For example, the random access procedure may be used for network initial access, handover, and UE-triggered UL data transmission. The UE may obtain UL synchronization and UL transmission resources through the random access procedure.

The random access procedure is divided into a contention-based random access procedure and a contention-free random access procedure.

For example, the step-by-step signals and actions/information in a contention-based random access procedure may be as shown in Table 6.

[Table 6]

|  |  | Type of Signals | Operations/Information obtained |
|---|---|---|---|
|  | Step 1 | PRACH preamble in UL | Initial beam obtainment<br>Random selection of RA-preamble ID |
|  | Step 2 | Random Access Response on DL-SCH | Timing Advanced information<br>RA-preamble ID<br>Initial UL grant, Temporary C-RNTI |
|  | Step 3 | UL transmission on UL-SCH | RRC connection request<br>UE identifier |
|  | Step 4 | Contention resolution on DL | Temporary C-RNTI on PDCCH for initial access<br>C-RNTI on PDCCH for UE in RRC_CONNECTED |

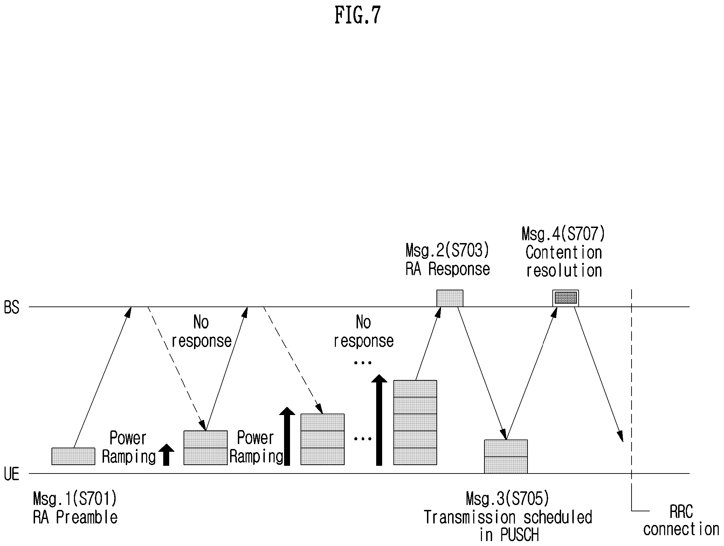

FIG. 7 illustrates a 4-step random access procedure in a wireless communication system to which the present disclosure can be applied.

Referring to FIG. 7, steps 1 to 4 in Table 6 may correspond to steps S701 to S707 in FIG. 7.

First, the UE may transmit a random access preamble as Msg.1 of a random access procedure in UL through PRACH (step S701).

Random access preamble sequences with two different lengths may be supported. The long sequence length 839 may be applied for subcarrier spacings of 1.25 and 5 kHz, and the short sequence length 139 may be applied for subcarrier spacings of 15, 30, 60 and 120 kHz.

Multiple preamble formats may be defined by one or more RACH OFDM symbols and different cyclic prefixes (and/or guard times). A RACH configuration for a cell may be provided to a UE as system information of the cell. The RACH configuration may include information on a subcarrier spacing of a PRACH, available preambles, a preamble format, etc. The RACH configuration may include association information between SSBs and RACH (time-frequency) resources. The UE may transmit a random access preamble on a RACH time-frequency resource associated with a detected or selected SSB.

A threshold of SSB for RACH resource association may be configured by the network, and transmission or retransmission of a RACH preamble may be performed based on an SSB for which a reference signal received power (RSRP) measured based on an SSB satisfies the threshold. For example, the UE may select one of the SSB(s) satisfying the threshold, and transmit or retransmit a RACH preamble based on the RACH resource associated with the selected SSB.

When the base station receives a random access preamble from the UE, the base station may transmit a random access response (RAR) message (Msg2) to the UE (step S703). A PDCCH scheduling a PDSCH carrying a RAR may be CRC masked with a random access (RA) radio network temporary identifier (RNTI) (RA-RNTI) and transmitted. A UE that detects a PDCCH masked with RA-RNTI may receive an RAR from a PDSCH scheduled by a DCI carried by the PDCCH. The UE may check whether random access response information for the preamble transmitted by the terminal, i.e., Msg1, is in the RAR. Whether there is random access information for Msg1 transmitted by the UE may be determined by whether there is a random access preamble ID for the preamble transmitted by the UE.

If there is no response to Msg1, the UE may retransmit the RACH preamble within a pre-determined number of times while performing power ramping. The UE may calculate the PRACH transmit power for the retransmission of the preamble based on the most recent path loss and power ramping counters.

The random access response information may include timing advance information for UL synchronization, an UL grant, a temporary C-RNTI, etc. When a UE receives the random access response information for itself on the PDSCH, the UE may recognize timing advance information for UL synchronization, an initial UL grant, and a temporary C-RNTI. The timing advance information may be used to control uplink signal transmission timing. In order to ensure that PUSCH/-PUCCH transmission by the UE is better aligned with subframe timing at the network level, the network (e.g., a base station) may measure a time difference between PUSCH/PUCCH/SRS reception and subframes and transmit timing advance information based on the time difference.

The UE may transmit UL transmission as Msg3 of the random access process on the uplink shared channel based on the random access response information (step S705). Msg3 may include an RRC connection request and a UE identifier.

In response to Msg3, the network may transmit Msg4, which may be treated as a contention resolution message on the DL (step S707). By receiving Msg4, the UE may enter the RRC connected state.

Meanwhile, the non-contention random access procedure may be performed when the UE is used in the process of handover to another cell or base station, or when requested by a command of the base station. The basic procedure of the non-contention random access procedure is similar to the contention-based random access procedure. However, unlike the contention-based random access procedure in which the UE randomly selects a preamble to use from among multiple random access preambles, in the case of the non-contention random access procedure, a preamble to be used by the UE (hereinafter referred to as a dedicated random access preamble) may be allocated to the UE by the base station. Information on the dedicated random access preamble may be included in an RRC message (e.g., a handover command) or provided to the UE through a PDCCH order. When the random access procedure is initiated, the UE transmits the dedicated random access preamble to the base station. When the UE receives a random access response from the base station, the random access procedure is completed.

As mentioned above, the UL grant in the RAR may schedule PUSCH transmission to the UE. The PUSCH carrying the initial UL transmission by the UL grant in the RAR may be referred to as Msg3 PUSCH. The contents of the RAR UL grant start from the MSB and end at the LSB, and may be given as shown in Table 7 below.

[Table 7]

| RAR UL grant field | Number of bits |
|---|---|
| Frequency hopping flag | 1 |
| Msg3 PUSCH frequency resource allocation | 12 |
| Msg3 PUSCH time resource allocation | 4 |
| MCS(modulation and coding scheme) | 4 |
| Transmit power control (TPC) for Msg3 PUSCH | 3 |
| CSI request | 1 |

Here, the TPC command is used to determine the transmission power of Msg3 PUSCH, and may be interpreted by, for example, Table 8 below.

[Table 8]

| TPC command | Value [dB] |
|---|---|
| 0 | -6 |
| 1 | -4 |
| 2 | -2 |
| 3 | 0 |
| 4 | 2 |
| 5 | 4 |
| 6 | 6 |
| 7 | 8 |

In a non-contention random access procedure, the CSI request field in the RAR UL grant may indicate whether the UE includes aperiodic CSI reporting in the corresponding PUSCH transmission. The subcarrier spacing for Msg3 PUSCH transmission may be provided by an RRC parameter. The UE may transmit PRACH and Msg3 PUSCH on the same uplink carrier of the same serving cell. The UL BWP for Msg3 PUSCH transmission may be indicated by SIB1 (SystemInformationBlock1).

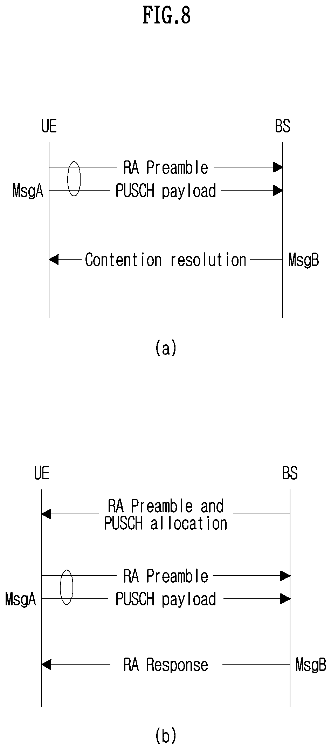

FIG. 8 illustrates a 2-step random access procedure in a wireless communication system to which the present disclosure may be applied.

Referring to FIG. 8, FIG. 8(a) illustrates a 2-step based contention-based random access (CBRA) procedure, and FIG. 8(b) illustrates a 2-step based non-contention-based random access (CFRA) procedure.

In Fig. 8, message A (MsgA) may include a preamble and a payload (PUSCH payload). The preamble and payload may be multiplexed in a TDM scheme. Message B (MsgB) may be transmitted as a response to message A to resolve contention, provide fallback indication(s), and/or provide backoff indication.

Technical terms/abbreviations used in the description in the present disclosure are as follows.

- UE: User Equipment
- SSB: Synchronization Signal Block
- MIB: Master Information Block
- RMSI: Remaining Minimum System Information
- FR1: Frequency Range 1. Refers to the frequency range below 6 GHz (e.g. 450 MHz to 6000 MHz).
- FR2: Frequency Range 2. Refers to the millimeter wave (mmWave) range above 24 GHz (e.g. 24250 MHz to 52600 MHz).
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices corresponds to RMSI. It is used to broadcast information required for NR devices to access a cell.
- CORESET (COntrol REsource SET): The time/frequency resource over which the NR device attempts to decode the candidate PDCCH.
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH monitoring occasion for Type0-PDCCH CSS set
- SIB1-R: (Additional) SIB1 for NR devices with reduced capability. It may be restricted to being generated as a separate TB from SIB1 and transmitted on a separate PDSCH.
- CORESET#0-R: CORESET#0 for NR devices with reduced capability
- Type0-PDCCH-R CSS set: a search space set in which an redcap UE monitors a set of PDCCH candidates for a DCI format with CRC scrambled by a SI-RNTI
- MO-R: PDCCH monitoring occasion for Type0-PDCCH CSS set
- Cell defining SSB (CD-SSB): SSB containing RMSI scheduling information among NR SSBs
- Non-cell defining SSB (non-CD-SSB): An SSB that is placed in the NR sync raster but does not contain RMSI scheduling information for the cell for measurement purposes. However, it may contain information indicating the location of the cell defining SSB.
- SCS: Subcarrier spacing
- SI-RNTI: System Information Radio-Network Temporary Identifier
- Camp on: "Camp on" is the UE state where the UE is ready to start a potential dedicated service or receive an ongoing broadcast service while staying in the cell.
- TB: Transport Block
- RSA (Redcap standalone): Cells that support only Redcap devices or services.
- SIB1(-R)-PDSCH: PDSCH transmitting SIB1(-R)
- SIB1(-R)-DCI: DCI scheduling SIB1(-R)-PDSCH (e.g. DCI format 1_0 with CRC scrambled by SI-RNTI)
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: Preamble and payload transmission of random access procedure for 2-step RA type
- MSGB: A response to MSGA in the 2-step random access procedure. MSGB may include response(s) to contention resolution, fallback indication(s), backoff indication, etc.
- RO-N: RACH Occasion (RO) for normal UE 4-step RACH and 2-step RACH (if configured)
- RO-N1, RO-N2: When a separate RO is configured for normal UE 2-step RACH, it is distinguished as RO-N1 (4-step) and RO-N2 (2-step).

- RO-R: redcap RACH Occasion (RO) configured separately from RO-N for UE 4-step RACH and 2-step RACH (if configured)
- RO-R1, RO-R2: When separate RO is configured for RedCap UE 2-step RACH, it is distinguished as RO-R1 (4-step) and RO-R2 (2-step).
- PG-R: MsgA-Preambles Group for redcap UE
- RAR: Random Access Response
- RAR window: Time window for monitoring RA response(s)
- FH: Frequency Hopping
- iBWP: initial BWP
- iBWP-DL(-UL): initial DL(UL) BWP
- iBWP-DL(-UL)-R: (Individual) initial DL(UL) BWP for RedCap UEs
- CS: Cyclic shift
- NB: Narrowband

<u>Sub-BWP configuration/operation method considering UEs with reduced capability</u>

In addition to the main use cases in next-generation wireless communication systems (e.g., mMTC, eMBB, URLLC, etc.), the importance and/or interest in use case areas that simultaneously consider multiple main use cases (e.g., mMTC and eMBB, mMTC and URLLC, etc.) is increasing. For example, the latter use case area may include connected industries, smart cities, and wearables.

Taking these points into consideration, a new type of UE that is efficient in terms of cost, complexity, power consumption, etc. of the UE compared to the existing UE in a wireless communication system may be considered. That is, the new type of UE may correspond to a UE with reduced capability compared to the existing UE, which may mean a UE with reduced capability.

For clarity of explanation in the following disclosure, the existing UE described above is referred to as a "non-RedCap UE", and the UE with reduced capability described above is referred to as a "RedCap UE".

Compared to non-RedCap UEs, RedCap UEs are efficient in terms of cost/complexity, have the characteristics of low power consumption, and specifically may have one or more of the following characteristics:

For example, with respect to complexity reduction, the RedCap UE may have features such as reduced maximum UE bandwidth, reduced number of UE RX/TX branches/antennas, Half-Duplex-FDD, mitigated UE processing time, mitigated UE processing capability, etc. Additionally, with respect to power saving, the RedCap UE may have features such as extended DRX for RRC inactive and/or idle, RRM mitigation for stationary devices, etc.

The target use cases of the RedCap UE with the above-described features may be as follows.

For example, for a target use case related to connected industries, sensors and actuators may be connected to a 5G network and core. Additionally, the target use case may include a large-scale industrial wireless sensor network (IWSN) use case and requirements. Additionally, the target use case may include relatively low-cost services that require small device form factors with battery life of several years as well as very demanding URLLC services. In this regard, the requirements for such services may be higher than LPWA (Low Power Wide Area, i.e., LTE-M/NB-IOT), but lower than URLCC and eMBB. Additionally, devices in the environment may include pressure sensors, humidity sensors, thermometers, motion sensors, accelerometers, actuators, etc.

For another example, for a target use case related to smart cities, the smart city vertical may include data collection and processing to more efficiently monitor and control city resources and provide services to city residents. In particular, the deployment of surveillance cameras may be essential not only in smart cities but also in factories and industrial complexes.

For another example, for the target use case related to wearable devices, wearable use cases may include smart watches, rings, eHealth-related devices, medical monitoring devices, etc. Here, a characteristic of the use case may be a small device size.

The aforementioned RedCap UE may have a deteriorated signal/channel transmission/reception performance compared to a non-RedCap UE. The deterioration of the transmission/reception performance may be due to a decrease in frequency diversity performance caused by a decrease in UE bandwidth. Accordingly, the decrease in performance may be greater as the UE bandwidth decreases.

Additionally, considering the use cases of the aforementioned RedCap UE (e.g., wearable devices, massive wireless sensors, etc.), traffic congestion issues may occur due to the need to support massive connections through narrow bandwidth.

Considering these problems, a method of supporting frequency hopping of RedCap UEs and supporting traffic offloading (TO) may be considered.

Additionally, two types of RedCap UEs may be operated in a wireless communication system.

As a specific example, a RedCap UE in a wireless communication system may be divided into a RedCap UE supporting 20MHz BWP (e.g., a RedCap UE based on 3GPP Rel-17) and a RedCap UE supporting 5MHz BWP (e.g., a RedCap UE based on 3GPP Rel-18).

That is, while RedCap UEs support reduced bandwidth compared to non-RedCap UEs, RedCap UEs may also be divided into RedCap UEs that support a further reduced bandwidth and RedCap UEs that do not.

For clarity of explanation in the following disclosure, a RedCap UE that supports a further reduced bandwidth (e.g., 5 MHz BWP) is referred to as a "first type RedCap UE," and a RedCap UE that does not support a reduced bandwidth (e.g., a RedCap UE that supports 20 MHz BWP) is referred to as a "second type RedCap UE."

A second type of RedCap UE may perform signal/channel transmission/reception procedures (e.g., initial access procedures, etc.) by utilizing a BWP of the same size as a non-RedCap UE.

In contrast, a first type of RedCap UE supporting a narrower bandwidth may not be able to use a BWP for a non-RedCap UE (e.g., initial BWP) or a BWP for a second type of RedCap UE (e.g., R17-initial BWP). Accordingly, for the first type of RedCap UE, it is necessary to consider a method of defining/configuring a frequency unit of a smaller size than the existing BWP and operating it.

Hereinafter, in the present disclosure, taking into consideration the matters described above, a method for defining/configuring a sub-BWP for a first type of RedCap UE (hereinafter, Embodiment 1) and a method for operating the sub-BWP thus defined/configured (hereinafter, Embodiment 2) are proposed.

Embodiment 1

For the first type of RedCap UE, a method may be considered in which the base station divides the initial BWP for non-RedCap UEs (e.g., initial BWP) or the initial BWP for the second type of RedCap UEs (e.g., R17-initial BWP) into N sub-BWPs and operates them (wherein, N is a positive integer).

The sub-BWP described in the present disclosure below may be a sub-BWP for DL transmission and reception and/or a sub-BWP for UL transmission and reception.

For example, in relation to UL transmission and reception, for a first type of RedCap UE, the base station may divide an initial UL BWP for a non-RedCap UE or an initial UL BWP for a second type of RedCap UE (e.g., R17-initial UL BWP) into N UL sub-BWPs and operate them. Here, the UL sub-BWPs may be applied to initial access, SI (system information) request, and/or random access (e.g., RACH for small data transmission (SDT)).

For the sub-BWP described in the present disclosure below, if the sub-BWP is used for random access-related transmission (based on terminal operation), the sub-BWP may be a UL sub-BWP, and if the sub-BWP is used for random access-related reception, the sub-BWP may be a DL sub-BWP.

For example, the sub-BWP in the present disclosure may be set to a specific bandwidth size (e.g., 5 MHz) for the first type of RedCap UE.

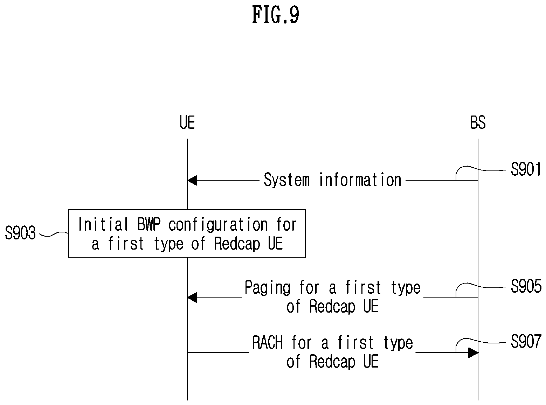

FIG. 9 illustrates an operation flowchart for configuring a sub-BWP in a wireless communication system according to an embodiment of the present disclosure.

Referring to FIG. 9, the base station may configure/provide information on the sub-BWP to the first type RedCap UE through system information (S901). For example, the system information may be SIB1 or SIB1 for the first type RedCap UE.

A UE that has configured/received the aforementioned system information may configure an initial BWP for a first type of RedCap UE (S903).

Thereafter, based on the configured initial BWP, the UE may receive paging for the first type of RedCap UE transmitted by the base station (S905), and transmit a RACH for the first type of RedCap UE to the base station (S907).

Below, methods for configuring/defining N sub-BWPs are described through specific examples.

(Embodiment 1-1)

N sub-BWPs may be configured based on the initial BWP for non-RedCap UEs (e.g. 3GPP Rel-15/16 UEs).

In this regard, the frequency size of each sub-BWP may be the same or different. Additionally, a guard band may or may not be configured between different sub-BWPs.

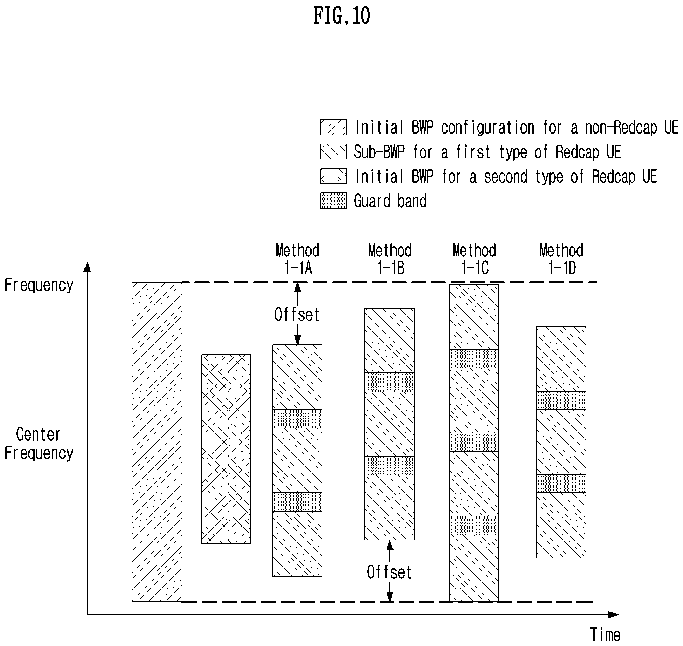

FIG. 10 illustrates a method for configuring a sub-BWP in a wireless communication system according to an embodiment of the present disclosure.

Referring to FIG. 10, the sub-BWP for a first type of RedCap UE (e.g., a 3GPP Rel-18 RedCap UE) may be configured based on an initial BWP for a non-RedCap UE, regardless of an initial BWP for a second type of RedCap UE (e.g., a 3GPP Rel-17 RedCap UE).

A sub-BWP may be configured/defined based on one or more of the following examples.

For example, as in method 1-1A illustrated in FIG. 10, $N_1$ sub-BWPs may be configured by dividing frequency resources equal to or less than a negative PRB offset based on a highest PRB of an initial BWP for a non-RedCap UE into $N_1$ sub-BWPs.

For another example, as in the method 1-1B illustrated in FIG. 10, $N_2$ sub-BWPs may be configured by dividing frequency resources equal to or greater than a positive PRB offset based on the lowest PRB of the initial BWP for the non-RedCap UE into $N_2$ sub-BWPs.

As another example, as in method 1-1C illustrated in FIG. 10, $N_3$ sub-BWPs may be configured by dividing the frequency resources/size of the initial BWP for non-RedCap UEs into $N_3$ evenly (e.g., in a size of 5 MHz) or unequally.

For another example, as in the method 1-1D illustrated in FIG. 10, the $N_4$ sub-BWPs may be configured based on configuring a center sub-BWP that shares the center frequency of the initial BWP for the non-RedCap UE. In this case, the $N_4$ sub-BWPs may be configured by adding sub-BWPs of the same (or different) size above (and/or below) the configured center sub-BWP.

(Embodiment 1-2)

N sub-BWPs may be configured based on an initial BWP for a second type of RedCap UE (e.g., a 3GPP Rel-17 RedCap UE).

In this regard, the frequency size of each sub-BWP may be the same or different. Additionally, a guard band may or may not be configured between different sub-BWPs.

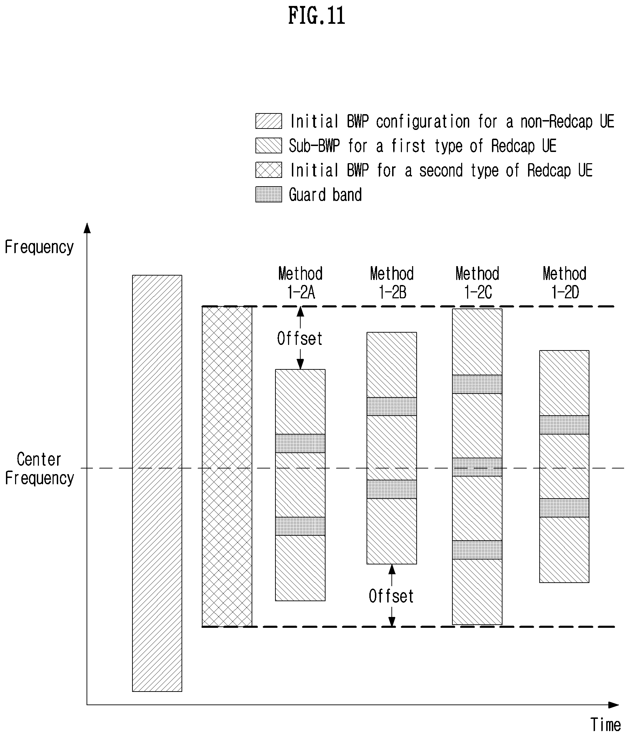

FIG. 11 illustrates another method for configuring a sub-BWP in a wireless communication system according to an embodiment of the present disclosure.

Referring to FIG. 11, a sub-BWP for a first type of RedCap UE (e.g., a 3GPP Rel-18 RedCap UE) may be configured based on an initial BWP for a second type of RedCap UE, regardless of an initial BWP for a non-RedCap UE (e.g., a 3GPP Rel-15/16 UE).

A sub-BWP may be configured/defined based on one or more of the following examples.

For example, as in the method 1-2A illustrated in FIG. 11, $N_1$ sub-BWPs may be configured by dividing frequency resources equal to or less than a negative PRB offset based on the highest PRB of the initial BWP for the second type RedCap UE into $N_1$ sub-BWPs.

For another example, as in the method 1-2B illustrated in FIG. 11, $N_2$ sub-BWPs may be configured by dividing frequency resources equal to or greater than a positive PRB offset based on the lowest PRB of the initial BWP for the second type RedCap UE into $N_2$ sub-BWPs.

As another example, as in the method 1-2C illustrated in FIG. 11, $N_3$ sub-BWPs may be configured by dividing the frequency resources/size of the initial BWP for the second type of RedCap UE into N3 evenly (e.g., in a size of 5 MHz) or unequally.

For another example, as in the method 1-2D illustrated in FIG. 11, the $N_4$ sub-BWPs may be configured based on configuring a center sub-BWP that shares the center frequency of the initial BWP for the second type of RedCap UE. In this case, the $N_4$ sub-BWPs may be configured by adding sub-BWPs of the same (or different) size above (and/or below) the configured center sub-BWP.

In the manner described in FIG. 10 and FIG. 11 described above, for each of the N sub-BWPs, an index (e.g., subBWPIndex)/indicator (e.g., sub-BWP indicator) for each sub-BWP may be configured.

In this regard, the values of the corresponding index/indicator may be sequentially assigned from 0 to N-1 (or from 1 to N) toward higher sub-BWPs based on the lowest sub-BWP in the frequency domain. Alternatively, the values of the corresponding index/indicator may be sequentially assigned from 0 to N-1 (or from 1 to N) toward lower sub-BWPs based on the highest sub-BWP in the frequency domain.

Additionally or alternatively, the base station may configure/provide one or more separate initial BWPs for the first type RedCap UEs.

For example, the initial BWP for the first type RedCap UE may be set/provided as shown in Table 9 and Table 10 below. In this regard, the base station may configure N initial BWP lists for the first type RedCap UE for N sub-BWPs.

Table 9 illustrates the initial BWP configuration for DL purposes for a Type 1 RedCap UE.

[Table 9]

```
DownlinkConfigCommon ::= SEQUENCE {
frequencyInfoDL FrequencyInfoDL OPTIONAL, -- Cond InterFreqHOAndServCellAdd
initialDownlinkBWP BWP-DownlinkCommon OPTIONAL, -- Cond ServCellAdd
...,
initialDownlinkBWP-RedCap-r17 BWP-DownlinkCommon OPTIONAL -- Need R
initialDownlinkBWPList-RedCap-r18::= SEQUENCE (SIZE (1..No_of_subBWP))of BWP-DownlinkCommon
}

BWP ::= SEQUENCE {
locationAndBandwidth INTEGER (0..37949),
subcarrierSpacing SubcarrierSpacing,
cyclicPrefix ENUMERATED { extended } OPTIONAL -- Need R
}

BWP-DownlinkCommon ::= SEQUENCE {
genericParameters BWP,
pdcch-ConfigCommon SetupRelease { PDCCH-ConfigCommon } OPTIONAL, -- Need M
pdsch-ConfigCommon SetupRelease { PDSCH-ConfigCommon } OPTIONAL, -- Need M
... }
```

Table 10 illustrates the initial BWP configuration for UL purposes for Type 1 RedCap UEs.

[Table 10]

```
UplinkConfigCommon ::= SEQUENCE {
frequencyInfoUL FrequencyInfoUL OPTIONAL, -- Cond InterFreqHOAndServCellAdd
initialUplinkBWP BWP-UplinkCommon OPTIONAL, -- Cond ServCellAdd
dummy TimeAlignmentTimer
}

UplinkConfigCommon-v1700 ::= SEQUENCE {
initialUplinkBWP-RedCap-r17 BWP-UplinkCommon OPTIONAL -- Need R
initialUplinkBWPList-RedCap-r18::= SEQUENCE (SIZE (1..No_of_subBWP))of BWP-UplinkCommon
}

BWP ::= SEQUENCE {
locationAndBandwidth INTEGER (0..37949),
subcarrierSpacing SubcarrierSpacing,
cyclicPrefix ENUMERATED { extended } OPTIONAL -- Need R
}

BWP-UplinkCommon ::= SEQUENCE {
genericParameters BWP,
rach-ConfigCommon SetupRelease { RACH-ConfigCommon } OPTIONAL, -- Need M
pusch-ConfigCommon SetupRelease { PUSCH-ConfigCommon } OPTIONAL, -- Need M
pucch-ConfigCommon SetupRelease { PUCCH-ConfigCommon } OPTIONAL, -- Need M
...,
]]
}
```

Embodiment 2

A terminal that has configured/received a sub-BWP as in the aforementioned embodiment 1 may select and operate the sub-BWP based on one or more of the methods described in this embodiment.

That is, the first type of RedCap UE may receive sub-BWP related configuration information through system information, and the UE may select a sub-BWP based on the following method and perform subsequent procedures in the sub-BWP.

The "UE" in the following methods may correspond to the RedCap UE of the first type described above.

(Method 2-1)

A UE may select one sub-BWP among N sub-BWPs based on a UE-specific ID (e.g., s-TMSI/C-RNTI/I-RNTI, etc.).

For example, the UE may select a sub-BWP index equal to the value of UE ID mod N (where mod means a modulo function) and select the corresponding sub-BWP.

(Method 2-2)

A UE may select one sub-BWP among N sub-BWPs depending on the type of the UE (i.e., UE type).

For example, UE Type may be classified into 1 Rx UE, 2 Rx UE, half-duplex UE, full-duplex UE, 20MHz supporting UE, 5MHz supporting UE, etc. In this case, 1 Rx UE may select sub-BWP corresponding to sub-BWP index 0, 2 Rx UE may select sub-BWP corresponding to sub-BWP index 1, half-duplex UE may select sub-BWP corresponding to sub-BWP index 2, full-duplex UE may select sub-BWP corresponding to sub-BWP index 3, 20MHz supporting UE may select sub-BWP corresponding to sub-BWP index 4, and 5MHz supporting UE may select sub-BWP corresponding to sub-BWP index 5.

(Method 2-3)

A UE may select one sub-BWP according to the paging sub-group to which the UE belongs.

For example, the UE may select a sub-BWP index mapped according to an index of a paging sub-group, and select a sub-BWP corresponding to the selected sub-BWP index.

(Method 2-4)

A UE may randomly select a sub-BWP.

For example, the UE may randomly select a random value between [0, 1] and compare it with the values [0, N1, N2, N3, ..., 1] transmitted by the base station through system information to select one sub-BWP.

As a specific example, if the arbitrary ss value exists between [0, N1], the UE may select sub-BWP index 0 and select the sub-BWP corresponding to the sub-BWP index 0. If the arbitrary value exists between [N1, N2], the UE may select sub-BWP index 1 and select the sub-BWP corresponding to the sub-BWP index 1. If the arbitrary value exists between [N2, N3], the UE may select sub-BWP index 3, etc. and select the sub-BWP corresponding to the sub-BWP index 3, etc.

(Method 2-5)

A UE may select a sub-BWP based on the cell quality measured by the UE.

For example, if the reference signal received power (RSRP) value of the serving cell measured by the UE is greater than or equal to the Q0 value, the UE may select sub-BWP index 0 and select a sub-BWP corresponding to the sub-BWP index 0. If the RSRP value of the serving cell measured by the UE is greater than or equal to the Q1 value, the UE may select sub-BWP index 1 and select a sub-BWP corresponding to the sub-BWP index 1. If the RSRP value of the serving cell measured by the UE is greater than or equal to the Q2 value, the UE may select sub-BWP index 2, etc. and select a sub-BWP corresponding to the sub-BWP index 2, etc.

(Method 2-6)

A UE may select a sub-BWP based on the beam quality measured by the UE.

For example, if the SSB index for the best beam of the serving cell measured by the UE is (0, 4), the UE may select sub-BWP index 0 and select the sub-BWP corresponding to the sub-BWP index 0. If the SSB index for the best beam of the serving cell measured by the UE is (1, 5), the UE may select sub-BWP index 1 and select the sub-BWP corresponding to the sub-BWP index 1. If the SSB index for the best beam of the serving cell measured by the UE is (2, 6), the UE may select sub-BWP index 2, etc. and select the sub-BWP corresponding to the sub-BWP index 2, etc.

(Method 2-7)

The UE may select a sub-BWP according to the purpose designated/configured by the base station.

In this regard, the UE may select a sub-BWP based on one or more of the following methods 2-7A to 2-7E.

- Method 2-7A.

The base station may designate a sub-BWP where SIB1 for the first type of RedCap UE (hereinafter referred to as R-SIB1) is located/to be transmitted as sub-BWP index 0 (hereinafter referred to as the first sub-BWP) through a DCI/SIB1 message scheduling MIB/SIB1 (e.g., existing SIB1). Alternatively, R-SIB1 may be configured to always be transmitted in the first sub-BWP.

A Type 1 RedCap UE may receive R-SIB1 by moving/switching to the first sub-BWP after receiving DCI/SIB1 message scheduling MIB reception/SIB1.

In this regard, for the first sub-BWP, SSB configuration information (e.g., Cell-defining SSB or non-Cell-defining SSB) for the first type RedCap UE may be configured. The first type RedCap UE may acquire/receive the corresponding SSB configuration information via SIB1 or R-SIB1. The first type RedCap UE may measure SSB (e.g., 3GPP Rel-18 SSB) according to the configuration of the base station and apply it to idle mobility measurement for cell selection/reselection. Additionally or alternatively, the first type RedCap UE may apply the corresponding SSB measurement result to paging monitoring, PRACH preamble/resource selection, etc. in the sub-BWP.

- Method 2-7B.

The base station may designate a sub-BWP where other system information (i.e., SIBx, x>1) is located/will be transmitted as sub-BWP index 1 (hereinafter, the corresponding sub-BWP is referred to as the second sub-BWP) through a DCI/SIB1 message/R-SIB1 that schedules MIB/SIB1. Alternatively, the other system information may be configured to always be transmitted in the second sub-BWP.

- Method 2-7C.

The base station may designate the sub-BWP where the paging is located/to be transmitted as sub-BWP index 2 (hereinafter, the sub-BWP is referred to as the third sub-BWP) through the DCI/SIB1 message/R-SIB1 that schedules MIB/SIB1. Alternatively, the paging may be configured to always be transmitted in the third sub-BWP.

Additionally or alternatively, paging may be configured to be transmittable in k sub-BWPs out of N sub-BWPs, in which case the following example behavior may be possible, where the value of k may be less than or equal to the value of N.

For example, the UE may select one of the k sub-BWPs based on one of the aforementioned methods 2-1 to 2-6 and monitor paging in the selected sub-BWP. At this time, a paging search space may be set for all of the k sub-BWPs.

As another example, a base station or a core network (CN) node (e.g., AMF, MMF) may indicate a UE to select one of the k sub-BWPs. The UE may monitor paging in the indicated sub-BWP. In this regard, the UE may monitor paging by selecting a sub-BWP in which a paging search space is configured. At this time, if the UE is in an inactive mode, the base station may indicate information to the UE, and if the UE is in an idle mode, the CN node may indicate information to the UE.

As another example, the UE may select a sub-BWP indicated in an RRC release message and monitor paging in the corresponding sub-BWP. In this regard, when the UE switches from a connected mode to an idle mode or an inactive mode, the base station may indicate a sub-BWP index through the RRC release message. The UE may select a sub-BWP according to the indicated sub-BWP index and monitor paging in the corresponding sub-BWP.

- Method 2-7D.

The base station may designate a sub-BWP to perform the RA procedure (i.e., the aforementioned random access procedure) as sub-BWP index 3 (hereinafter, the sub-BWP is referred to as the fourth sub-BWP) through the DCI/SIB1 message/R-SIB1 that schedules MIB/SIB1. Alternatively, the RA procedure may be configured to always be performed in the fourth sub-BWP.

In this regard, in the selected/designated sub-BWP, the UE may perform all of PRACH preamble/MsgA preamble transmission, Msg2/MsgB reception, Msg3/MsgA PUSCH transmission, PDCCH monitoring for RA-RNTI, and Msg4 reception.

Alternatively, the UE may perform some of the PRACH preamble/MsgA preamble transmission, Msg2/MsgB reception, Msg3/MsgA PUSCH transmission, PDCCH monitoring for RA-RNTI, and Msg4 reception in a different sub-BWP rather than the selected/designated sub-BWP.

For example, if another sub-BWP (hereinafter referred to as the fifth sub-BWP) is indicated by MAC-CE for Msg2/MsgB or RA-RNTI-based DCI scheduling Msg2/MsgB (e.g., sub-BWP index 6 is indicated), the UE may perform Msg3 PUSCH transmission and/or subsequent Msg4 PDCCH/PDSCH reception and PUCCH transmission in the fifth sub-BWP, not the fourth sub-BWP. Alternatively, the UE may transmit PUCCH or receive Msg4 PDSCH in another sub-BWP indicated by Msg4 PDCCH. Thereafter, the UE may select another sub-BWP based on the MAC-CE or RRC message of Msg4 PDSCH, and perform movement/switching to the selected sub-BWP.

Additionally or alternatively, the RA procedure may be configured to be performed in k sub-BWPs out of the N sub-BWPs, in which case the following example operations may be possible, where the value of k may be equal to or less than the value of N.

For example, the UE may select one of the k sub-BWPs based on one of the aforementioned methods 2-1 to 2-6 and perform an RA procedure in the selected sub-BWP. At this time, a search space for the RA procedure may be set for all of the k sub-BWPs.

As another example, a base station or a core network (CN) node (e.g., AMF, MMF) may indicate one sub-BWP among k sub-BWPs to a UE. The UE may perform an RA procedure in the indicated sub-BWP. In this regard, the UE may select a sub-BWP in which a search space for the RA procedure is set and perform the RA procedure. At this time, if the UE is in an inactive mode, the base station may indicate information to the UE, and if the UE is in an idle mode, the CN node may indicate information to the UE.

As another example, the UE may select a sub-BWP indicated in an RRC release message and perform an RA procedure in the corresponding sub-BWP. In this regard, when the UE switches from a connected mode to an idle mode or an inactive mode, the base station may indicate a sub-BWP index through the RRC release message. The UE may select a sub-BWP according to the indicated sub-BWP index and perform an RA procedure in the corresponding sub-BWP.

As another example, the UE may select a sub-BWP in which PRACH preamble(s)/resource(s) are configured that are mapped to an SSB index or CSI-RS resource indicator (CRI) greater than or equal to a (pre-set/defined) threshold value, and perform an RA procedure in the corresponding sub-BWP. In this regard, if an SSB index (2, 3) greater than or equal to the threshold value is selected in the PRACH preamble/resource selection process, the UE may select one of a sub-BWP or multiple sub-BWPs in which a PRACH preamble/resource mapped to/corresponding to SSB index 2 or 3 is configured, and perform an RA procedure in the corresponding sub-BWP.

As another example, the UE may select a sub-BWP depending on the type of RA procedure.

In this regard, if a 2-step RA procedure is selected according to a selection condition of a 2-step RA procedure (e.g., a procedure such as FIG. 8), the UE may select a sub-BWP in which a 2-step RA procedure (i.e., a 2-step RACH) is configured to perform the 2-step RA procedure. Otherwise, the UE may select a sub-BWP in which a 4-step RA procedure (e.g., a procedure such as FIG. 7, i.e., a 4-step RACH) is configured to perform the 4-step RA procedure.

Alternatively, if the 4-step RA procedure is selected based on a 4-step RA procedure selection condition, or if a condition for falling back from the 2-step RA procedure to the 4-step RA procedure occurs, the UE may select a sub-BWP in which the 4-step RA procedure is configured and perform the 4-step RA procedure.

Alternatively, if the RA procedure for SDT use is selected based on the RA procedure selection condition for SDT use, the UE may select a sub-BWP in which the RA procedure for SDT use (i.e., SDT RACH) is configured to perform the RA procedure for SDT use. Otherwise, the UE may select a sub-BWP in which the 2-step RA procedure or the 4-step RA procedure is configured to perform the RA procedure for non-SDT use.

- Method 2-7E.

The base station may designate a sub-BWP to perform SDT as sub-BWP index 4 (hereinafter, the sub-BWP is referred to as the sixth sub-BWP) through the DCI/SIB1 message/R-SIB1 that schedules MIB/SIB1. Alternatively, the CG (configured grant) PUSCH transmission and PDCCH monitoring for SDT purposes may be configured to always be performed in the sixth sub-BWP.

In this regard, CG transmission/reception for SDT purposes and RA procedure for SDT purposes may be configured be performed in the same (or different) sub-BWPs. If performance in different sub-BWPs is configured, the UE may move/switch sub-BWPs depending on whether it selects CG transmission/reception or RA procedure for SDT.

In relation to the present embodiment, the first type of RedCap UE can define the selected sub-BWP based on the methods described above as follows.

For example, the UE may define/configure the selected sub-BWP as the initial BWP for the first type of RedCap UE. In this case, the first type of RedCap UE may apply the selected sub-BWP to perform the existing initial BWP operation.

For another example, the UE may define/configure the selected sub-BWP as a BWP for a specific purpose for the first type of RedCap UE. As a specific example, the UE may define the selected sub-BWP as a DL BWP for paging monitoring purpose, a UL/DL BWP for RA procedure purpose, or a UL/DL BWP for SDT purpose according to one or more of the above-described methods 2-1 to 2-7.

Additionally, with respect to the embodiments described above in the present disclosure, the following operation may be considered when the first type of RedCap UE receives R-SIB 1.

For example, when a type 1 RedCap UE receives a DCI scheduling SIB1 (e.g., legacy SIB 1) / SIB1, the type 1 RedCap UE may receive separate cellBarred related parameters for the UE via the SIB1 / SIB1 scheduling DCI. Based on the received cellBarred related parameters, the type 1 RedCap UE may determine whether it may access the cell or whether it should bar the cell.

For another example, if a type 1 RedCap UE receives a DCI scheduling a new R-SIB 1 or R-SIB1 without receiving SIB1 (e.g., legacy SIB 1), the type 1 RedCap UE may select a sub-BWP for R-SIB 1 use and receive separate cellBarred related parameters for the UE via the DCI or R-SIB1 in the selected sub-BWP. Based on the received cellBarred related parameters, the type 1 RedCap UE may determine whether it may access the cell or should bar the cell.

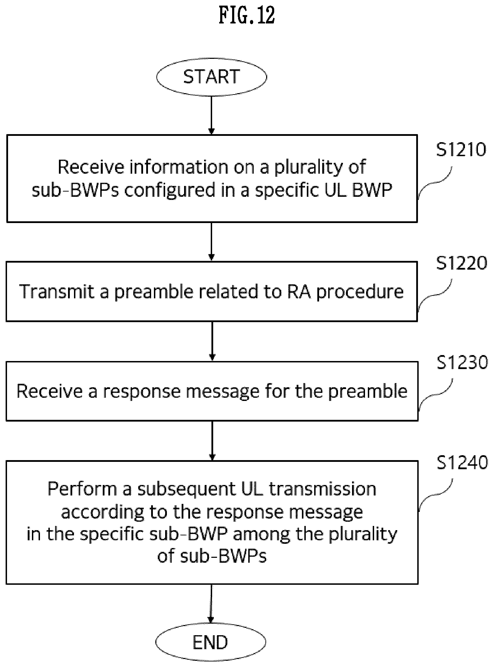

FIG. 12 is a diagram illustrating the operation of a UE for a method for performing a sub-BWP based RA procedure according to one embodiment of the present disclosure.

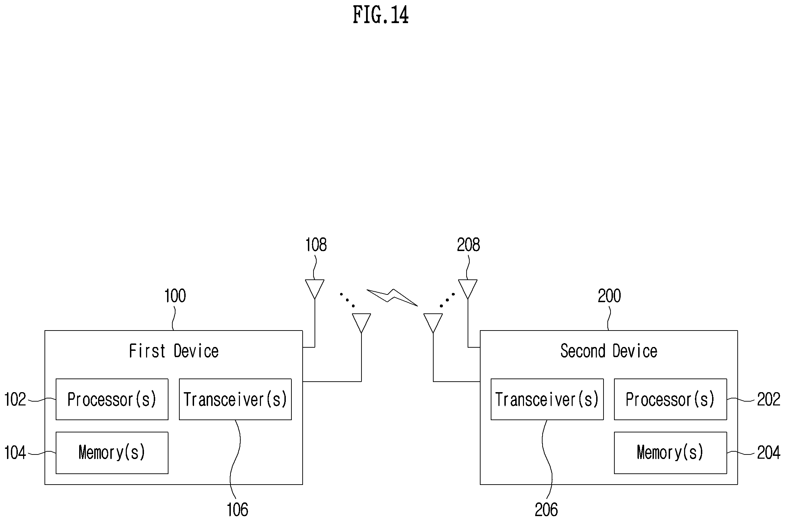

FIG. 12 illustrates an operation of a UE based on the previously proposed method (e.g., one or a combination of Embodiments 1 and 2 and detailed embodiments thereof). The example of FIG. 12 is for convenience of explanation and does not limit the scope of the present disclosure. Some of the step(s) illustrated in FIG. 12 may be omitted depending on the situation and/or setting. In addition, the UE in FIG. 12 is only an example and may be implemented as a device illustrated in FIG. 14 below. For example, the processor (102/202) of FIG. 14 may control the transceiver (106/206) to transmit and receive channels/signals/data/information, etc. (e.g., RRC signaling, MAC CE, DCI for UL/DL scheduling, SRS, PDCCH, PDSCH, PUSCH, PUCCH, etc.), and may also control the processor to store transmitted or received channels/signals/data/information, etc. in the memory (104/204).

Referring to FIG. 12, at step S1210, the UE may receive information on a plurality of sub-BWPs configured in a specific UL BWP.

In this regard, a particular UL BWP may correspond to an initial UL BWP, which may be an initial UL BWP for a non-RedCap UE or an initial UL BWP for a second type of RedCap UE.

For example, a plurality of sub-BWPs may be configured for a UE with reduced capability to support a narrow bandwidth (e.g., a RedCap UE of the first type). The plurality of sub-BWPs may be located in frequency resources that are a pre-configured frequency offset from a resource block having a highest or lowest index within the specific uplink BWP.

At step S1220, the UE may transmit a preamble related to a random access procedure.

For example, if the random access procedure corresponds to a 4-step RA procedure, transmission of the preamble may correspond to transmission of Msg1. Alternatively, if the random access procedure corresponds to a 2-step RA procedure, transmission of the preamble may correspond to transmission of MsgA.

At step S1230, the UE may receive a response message to the preamble.

For example, if the random access procedure corresponds to a 4-step RA procedure, the reception of the response message may correspond to the reception of Msg2. In contrast, if the random access procedure corresponds to a 2-step RA procedure, the reception of the response message may correspond to the reception of MsgB.

In step S1240, the UE may perform subsequent uplink transmission according to the response message in a specific sub-BWP among the plurality of sub-BWPs.

For example, if the random access procedure corresponds to a 4-step RA procedure, the subsequent uplink transmission may correspond to a Msg3 transmission. In contrast, if the random access procedure corresponds to a 2-step RA procedure, the subsequent uplink transmission may correspond to a UL transmission performed after the RA procedure is completed.

Here, the specific sub-BWP may be indicated based on the response message.

For example, information on the specific sub-BWP may be included in the MAC-CE corresponding to the response message. For another example, information on the specific sub-BWP may be included in the RA-RNTI based DCI scheduling the response message.

In this regard, transmission of the preamble and/or reception of the response message may be performed in a sub-BWP other than the specific sub-BWP among the plurality of sub-BWPs.

Additionally or alternatively, the particular sub-BWP may be indicated based on a sub-BWP index associated with the type of the random access procedure (e.g., 4-step RA procedure / 2-step RA procedure).

Additionally or alternatively, the specific sub-BWP may be based on a sub-BWP index associated with the RSRP value of the serving cell measured by the UE.

Additionally or alternatively, the specific sub-BWP may be based on a PRACH resource/preamble associated with an SSB index (or CRI) that satisfies a pre-configured threshold condition.

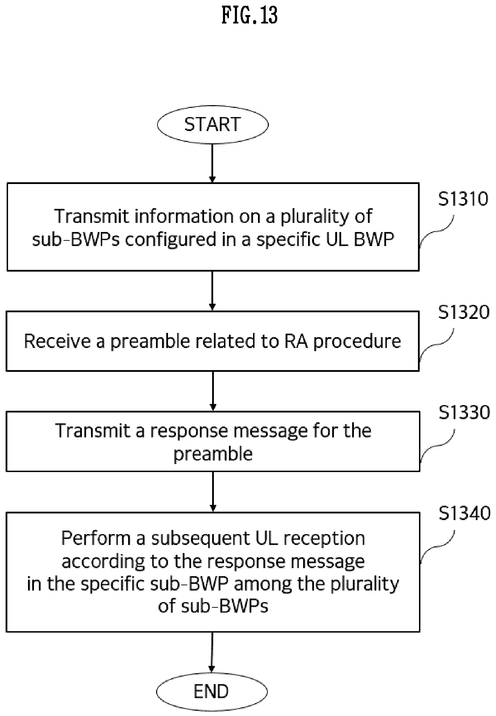

FIG. 13 is a diagram illustrating the operation of a base station for a method for performing a sub-BWP based RA procedure according to one embodiment of the present disclosure.

FIG. 13 illustrates the operation of a base station based on the previously proposed method (e.g., one or a combination of Embodiments 1 and 2 and detailed embodiments thereof). The example of FIG. 13 is for convenience of explanation and does not limit the scope of the present disclosure. Some of the step(s) illustrated in FIG. 13 may be omitted depending on the situation and/or setting. In addition, the base station in FIG. 13 is only an example and may be implemented with the device illustrated in FIG. 14 below. For example, the processor (102/202) of FIG. 14 may control the transceiver (106/206) to transmit and receive channels/signals/data/information, etc. (e.g., RRC signaling, MAC CE, DCI for UL/DL scheduling, SRS, PDCCH, PDSCH, PUSCH, PUCCH, etc.), and may also control the processor to store transmitted or received channels/signals/data/information, etc. in the memory (104/204).

Referring to FIG. 13, at step S1310, the base station may transmit information on a plurality of sub-BWPs configured in a specific UL BWP.

In this regard, a specific UL BWP may correspond to an initial UL BWP, which may be an initial UL BWP for a non-RedCap UE or an initial UL BWP for a second type of RedCap UE.

At step S1320, the base station may receive a preamble related to a random access procedure.

For example, if the random access procedure corresponds to a 4-step RA procedure, reception of the preamble may correspond to reception of Msg1. Alternatively, if the random access procedure corresponds to a 2-step RA procedure, reception of the preamble may correspond to reception of MsgA.

At step S1330, the base station may transmit a response message to the preamble.

For example, if the random access procedure corresponds to a 4-step RA procedure, the transmission of the response message may correspond to a Msg2 transmission. Alternatively, if the random access procedure corresponds to a 2-step RA procedure, the transmission of the response message may correspond to a MsgB transmission.

In step S1340, the base station may perform subsequent uplink reception according to the response message in a specific sub-BWP among the plurality of sub-BWPs.

For example, if the random access procedure corresponds to a 4-step RA procedure, the subsequent uplink reception may correspond to Msg3 reception. In contrast, if the random access procedure corresponds to a 2-step RA procedure, the subsequent uplink reception may correspond to UL reception performed after the RA procedure is completed.

Detailed descriptions of the indication for a plurality of sub-BWPs and specific sub-BWP are identical to those described with reference to FIG. 12, so redundant descriptions are omitted.

With respect to the operations in FIG. 12 and FIG. 13, the detailed method(s) in Embodiment 1 and/or Embodiment 2 described above in the present disclosure may be applied.

According to the above-described embodiment(s) of the present disclosure, a method and device for operating a sub-BWP considering a UE with reduced capability in a wireless communication system may be provided. Additionally, a method and device for transmitting and receiving system information considering a UE with reduced capability in a wireless communication system may be provided.

Based on this, there is a technical effect that RedCap UEs operating in small bands (e.g., 5 MHz band) may also support procedures defined in the existing method (e.g., initial access/random access procedures).

General Device to which the Present Disclosure may be applied

FIG. 14 illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

**1.** A method performed by a user equipment (UE) in a wireless communication system, the method comprising:

receiving information on a plurality of sub-BWPs configured in a specific uplink bandwidth part (BWP);
transmitting a preamble related to a random access procedure;

receiving a response message for the preamble; and

performing a subsequent uplink transmission according to the response message in a specific sub-BWP among the plurality of sub-BWPs,

wherein the specific sub-BWP is indicated based on the response message.

2. The method of claim 1,
   wherein the preamble is transmitted in a sub-BWP other than the specific sub-BWP among the plurality of sub-BWPs.

3. The method of claim 1,
   wherein information on the specific sub-BWP is included in a MAC-CE corresponding to the response message.

4. The method of claim 1,
   wherein information on the specific sub-BWP is included in a DCI based on a random access-radio network temporary identifier (RA-RNTI) that schedules the response message.

5. The method of claim 1,
   wherein the plurality of sub-BWPs are configured for a UE with reduced capability supporting narrow bandwidth.

6. The method of claim 1,
   wherein the plurality of sub-BWPs are located in frequency resources that are a pre-configured frequency offset from a resource block having a highest or lowest index within the specific uplink BWP.

7. The method of claim 1,
   wherein, based on the random access procedure being a 4-step random access procedure, the subsequent uplink transmission corresponds to Msg3 transmission in the 4-step random access procedure,

8. The method of claim 1,

   wherein the specific sub-BWP is indicated based on a sub-BWP index associated with a type of the random access procedure, and

   wherein the type of the random access procedure corresponds to a 4-step random access procedure or a 2-step random access procedure.

9. The method of claim 1,
   wherein the specific sub-BWP is based on a sub-BWP index associated with a reference signal received power (RSRP) value of a serving cell measured by the UE.

10. The method of claim 1,
    wherein the specific sub-BWP is based on a physical random access channel (PRACH) resource associated with a synchronization signal block (SSB) index that satisfies a pre-configured threshold condition.

11. A user equipment (UE) in a wireless communication system, the first UE comprising:

    at least one transceiver; and
    at least one processor connected to the at least one transceiver,
    wherein the at least one processor is configured to:

    receive information on a plurality of sub-BWPs configured in a specific uplink bandwidth part (BWP);
    transmit a preamble related to a random access procedure;
    receive a response message for the preamble; and
    perform a subsequent uplink transmission according to the response message in a specific sub-BWP among the plurality of sub-BWPs,
    wherein the specific sub-BWP is indicated based on the response message.

12. A method performed by a base station in a wireless communication system, the method comprising:

    transmitting information on a plurality of sub-BWPs configured in a specific uplink bandwidth part (BWP);
    receiving a preamble related to a random access procedure;

transmitting a response message to the preamble; and
performing a subsequent uplink reception according to the response message in a specific sub-BWP among the plurality of sub-BWPs,
wherein the specific sub-BWP is indicated based on the response message.

13. A base station in a wireless communication, the base station comprising:

at least one transceiver; and
at least one processor connected to the at least one transceiver,
wherein the at least one processor is configured to:

transmit information on a plurality of sub-BWPs configured in a specific uplink bandwidth part (BWP);
receive a preamble related to a random access procedure;
transmit a response message to the preamble; and
perform a subsequent uplink reception according to the response message in a specific sub-BWP among the plurality of sub-BWPs,
wherein the specific sub-BWP is indicated based on the response message.

14. A processing unit configured to control a user equipment (UE) in a wireless communication system, the processing unit comprising:

at least one processor; and
at least one computer memory operably connected to the at least one processor and storing instructions for performing a method according to any one of Claim 1 to Claim 10 based on being executed by the at least one processor.

15. At least one non-transitory computer-readable medium storing at least one instruction, wherein:
the at least one instruction controls a device to perform a method according to any one of Claim 1 to Claim 10 in a wireless communication system by being executed by at least one processor.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

FIG.6

EP 4 518 500 A1

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

EP 4 518 500 A1

# FIG.7

# FIG.8

UE                                          BS

MsgA { RA Preamble ———————▶
       PUSCH payload ——————▶

◀——— Contention resolution ——— MsgB

(a)

UE                                          BS

◀——— RA Preamble and
     PUSCH allocation

MsgA { RA Preamble ———————▶
       PUSCH payload ——————▶

◀——— RA Response ——————— MsgB

(b)

# FIG.9

UE                                                                    BS

◄——————— System information ———————⌒—— S901

S903 ⌒ ┌─────────────────────────────────┐
      │ Initial BWP configuration for   │
      │ a first type of Redcap UE       │
      └─────────────────────────────────┘

◄——— Paging for a first type ———⌒—— S905
        of Redcap UE

——— RACH for a first type ———⌒—► S907
        of Redcap UE

FIG.10

# FIG.11

Legend:
- Initial BWP configuration for a non-Redcap UE
- Sub-BWP for a first type of Redcap UE
- Initial BWP for a second type of Redcap UE
- Guard band

Frequency

Method 1-2A    Method 1-2B    Method 1-2C    Method 1-2D

Offset

Center Frequency

Offset

Time

## FIG.12

START

Receive information on a plurality of
sub-BWPs configured in a specific UL BWP — S1210

Transmit a preamble related to RA procedure — S1220

Receive a response message for the preamble — S1230

Perform a subsequent UL transmission
according to the response message
in the specific sub-BWP among the plurality
of sub-BWPs — S1240

END

# FIG.13

```
                    START

Transmit information on a plurality of          S1310
sub-BWPs configured in a specific UL BWP

Receive a preamble related to RA procedure      S1320

Transmit a response message for the             S1330
preamble

Perform a subsequent UL reception               S1340
according to the response message
in the specific sub-BWP among the plurality
of sub-BWPs

                    END
```

EP 4 518 500 A1

# FIG.14

| INTERNATIONAL SEARCH REPORT | International application No. |
|---|---|
| | **PCT/KR2023/005856** |

**A.    CLASSIFICATION OF SUBJECT MATTER**

**H04W 72/0457**(2023.01)i; **H04W 72/231**(2023.01)i; **H04W 72/232**(2023.01)i; **H04W 72/542**(2023.01)i; **H04W 74/08**(2009.01)i

According to International Patent Classification (IPC) or to both national classification and IPC

**B.    FIELDS SEARCHED**

Minimum documentation searched (classification system followed by classification symbols)

H04W 72/0457(2023.01); H04J 11/00(2006.01); H04L 5/00(2006.01); H04W 52/08(2009.01); H04W 52/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: sub-BWP, random access preamble, random access response, subsequent uplink, DCI, Msg3, SSB index, PRACH

**C.    DOCUMENTS CONSIDERED TO BE RELEVANT**

| Category* | Citation of document, with indication, where appropriate, of the relevant passages | Relevant to claim No. |
|---|---|---|
| Y | US 2019-0190668 A1 (QUALCOMM INCORPORATED) 20 June 2019 (2019-06-20)<br>See paragraphs [0098]-[0101]; and claim 1. | 1-15 |
| Y | KR 10-2022-0019701 A (GUANGDONG OPPO MOBILE TELECOMMUNICATIONS CORP., LTD.) 17 February 2022 (2022-02-17)<br>See paragraph [0045]; and claims 2 and 4. | 1-15 |
| Y | KR 10-2018-0116157 A (LG ELECTRONICS INC.) 24 October 2018 (2018-10-24)<br>See paragraph [0104]; and claim 1. | 6,10 |
| A | US 2021-0045157 A1 (QUALCOMM INCORPORATED) 11 February 2021 (2021-02-11)<br>See paragraphs [0084]-[0089]; and figure 5. | 1-15 |
| A | US 2018-0146433 A1 (QUALCOMM INCORPORATED) 24 May 2018 (2018-05-24)<br>See paragraphs [0090]-[0099]; and figure 8. | 1-15 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 July 2023** | **28 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><th colspan="2">INTERNATIONAL SEARCH REPORT<br>Information on patent family members</th><th colspan="2">International application No.<br><br>PCT/KR2023/005856</th></tr>
</table>

| Patent document cited in search report | | | Publication date (day/month/year) | Patent family member(s) | | | Publication date (day/month/year) |
|---|---|---|---|---|---|---|---|
| US | 2019-0190668 | A1 | 20 June 2019 | CN | 111480386 | A | 31 July 2020 |
| | | | | EP | 3725125 | A1 | 21 October 2020 |
| | | | | US | 11552750 | B2 | 10 January 2023 |
| | | | | WO | 2019-118733 | A1 | 20 June 2019 |
| KR | 10-2022-0019701 | A | 17 February 2022 | CN | 113261378 | A | 13 August 2021 |
| | | | | CN | 113840390 | A | 24 December 2021 |
| | | | | EP | 3941150 | A1 | 19 January 2022 |
| | | | | JP | 2022-539972 | A | 14 September 2022 |
| | | | | US | 2022-0046720 | A1 | 10 February 2022 |
| | | | | WO | 2020-248259 | A1 | 17 December 2020 |
| KR | 10-2018-0116157 | A | 24 October 2018 | CN | 110574312 | A | 13 December 2019 |
| | | | | CN | 110574312 | B | 09 February 2021 |
| | | | | EP | 3595199 | A1 | 15 January 2020 |
| | | | | EP | 3595199 | B1 | 16 June 2021 |
| | | | | EP | 3852289 | A1 | 21 July 2021 |
| | | | | JP | 2020-517181 | A | 11 June 2020 |
| | | | | JP | 7055819 | B2 | 18 April 2022 |
| | | | | KR | 10-1975579 | B1 | 07 May 2019 |
| | | | | KR | 10-2019-0050312 | A | 10 May 2019 |
| | | | | KR | 10-2444331 | B1 | 16 September 2022 |
| | | | | US | 10944613 | B2 | 09 March 2021 |
| | | | | US | 2020-0274750 | A1 | 27 August 2020 |
| | | | | US | 2021-0160120 | A1 | 27 May 2021 |
| | | | | US | 2023-0113223 | A1 | 13 April 2023 |
| US | 2021-0045157 | A1 | 11 February 2021 | CN | 111406387 | A | 10 July 2020 |
| | | | | CN | 111406387 | B | 14 April 2023 |
| | | | | EP | 3718273 | A2 | 07 October 2020 |
| | | | | US | 10863543 | B2 | 08 December 2020 |
| | | | | US | 11317443 | B2 | 26 April 2022 |
| | | | | US | 2019-0174542 | A1 | 06 June 2019 |
| | | | | WO | 2019-108915 | A2 | 06 June 2019 |
| | | | | WO | 2019-108915 | A3 | 25 July 2019 |
| US | 2018-0146433 | A1 | 24 May 2018 | CN | 109983806 | A | 05 July 2019 |
| | | | | CN | 109983806 | B | 14 January 2022 |
| | | | | EP | 3542574 | A1 | 25 September 2019 |
| | | | | EP | 3542574 | B1 | 26 May 2021 |
| | | | | US | 10506523 | B2 | 10 December 2019 |
| | | | | WO | 2018-093682 | A1 | 24 May 2018 |

Form PCT/ISA/210 (patent family annex) (July 2022)